Europäisches Patentamt

European Patent Office

Office européen des brevets

(11) Publication number: **0 278 132**
**A1**

## EUROPEAN PATENT APPLICATION

(21) Application number: 87301107.6

(51) Int. Cl.4: **G06F 15/21**

(22) Date of filing: **09.02.87**

(43) Date of publication of application:
**17.08.88 Bulletin 88/33**

(84) Designated Contracting States:
**AT BE CH DE ES FR GB GR IT LI LU NL SE**

(71) Applicant: **COLLEGE SAVINGS BANK**
**P.O. Box 3769 5 Vaughn Drive**
**Princeton New Jersey 08540-6313(US)**

(72) Inventor: **Roberts, Peter A.**
**325 East 72nd Street Apartment 6A**
**New York New York 10021(US)**

(74) Representative: **Hartley, David et al**
**c/o Withers & Rogers 4 Dyer's Buildings**
**Holborn**
**London, EC1N 2JT(GB)**

(54) Methods and apparatus for funding future liability of uncertain cost.

(57) Methods and apparatus for funding a future liability by means of an insurance investment program. The system estimates the expected cost of the liability when the liability is expected to occur and computes the present value of each unit of insurance needed to yield that expected cost at maturity. The system also aids the insurance fund manager in making decisions regarding investment of fund assets in order to meet present and future obligations of the fund.

EP 0 278 132 A1

# METHODS AND APPARATUS FOR FUNDING FUTURE LIABILITY OF UNCERTAIN COST

## Background of the Invention

This invention relates to methods and apparatus for implementing and administering an insurance investment program to fund future liabilities whose present cost is known and whose future cost is unknown but can be projected with some risk factor.

Generally, insurance programs protect against the uncertain need to fund a liability of certain value, for example, the need to replace a car or a home in case of its loss or the need to provide a source of income in case of disability or death. Insurance programs are also used to protect against relatively large liabilities with a relatively small probability of occurrence, for example, personal injury liability.

Recently, investment programs such as mutual funds have come into existence to lower the risk which an individual must assume in investing his assets by combining the assets of many individuals into a common fund invested in a diversity of assets. These programs may be managed to maximize their yield, but they are not managed to provide a yield needed to fund any particular liability. Thus they have no insurance protection aspects.

However, there is no easy way for an investor to fund a relatively certain future liability of uncertain cost, such as the cost of a college education, in a way that also provides insurance protection for meeting that liability.

In view of the foregoing, it is an object of this invention to provide methods and apparatus for implementing an insurance investment program which provides an investor a future return adequate to fund an uncertain future liability whose cost can be projected on the basis of current cost data and assumptions of the rate of change of that data, and which determines the amount that must be invested in the program to provide the required future return.

It is a more particular object of this invention to provide methods and apparatus for implementing an insurance investment program which provides an investor a future return adequate to pay the cost of a college education for his beneficiary (e.g., a child, grandchild, etc.) in return for a present investment determined on the basis of current college cost data and projections of the rate of increase of college costs.

## Summary of the Invention

These and other objects of the invention are accomplished by providing a data processing system which implements an insurance investment program that combines the risk reduction advantages of a mutual fund with the protection advantages of an insurance policy, and moreover provides protection for a future liability of uncertain cost. The system provides for projection of the future cost of a liability of known present cost and discounting the future cost to the charge for an insurance premium to be paid by the investor. The system also provides for the management of the fund of invested premiums so that the yield of the fund is such that the cash flow from the fund is adequate for funding the program's liabilities at their predetermined maturity dates. The system periodically processes investor transactions to update the program fund's asset positions, provides information to the program manager to help him evaluate options for the purchase and sale of assets, and provides reports to the program manager and to the investors regarding income generated by the fund.

Further features and advantages of the invention, will be apparent from the following description of an illustrative embodiment with reference to the accompanying drawings in which:

Figure 1 is a schematic flow charge depicting the data processing methodology and structure in accordance with the principles of the invention;

Figure 2 is a schematic flow chart depicting in more detail the current spread calculation operation represented by block 26 in Figure 1;

Figure 3 is a schematic flow chart depicting in more detail the update asset position operation represented by block 27 in Figure 1;

Figure 4 is a block diagram of a data processing system according to the invention; and

Figure 5 is a schematic diagram of a small scale version of the system shown in Figure 4.

The data processing system for administering the program comprises a central computer connected to a network of remote point-of-sale stations, In overview, the system operates as follows. The point-of-sale stations serve as the data entry point for customer transactions, including insurance unit purchases, payouts and redemptions. The point-of-sale stations also serve as an access by which the salesman can refer to and retrieve data to answer a customer's questions concerning the insurance program to determine the charge to the customer for insurance unit purchases, and to determine the amount to be paid to the customer for insurance unit redemptions and payouts. In addition, the point-of-sale stations store a record of customer transactions which is periodically transmitted to the central office computer.

The central office computer receives and processes the customer transaction data from the multiple point-of-sale stations. Based on the customer transactions data, the data processing system which operates on the central computer updates the account list and the master file of account data. The central system also provides information to the manager of the investment fund for the program concerning the current purchases, payouts, and redemptions and projected purchases, payouts, and redemptions. The system also provides the investment manager information about how the particular investments available match the projected cash flow requirements of the fund.

The central system creates a report to the investment manager summarizing customer transactions and investment transactions, and an analysis of the projected cash flow needs of the fund compared to the projected income and maturity dates of the fund's investments. In addition, the system creates periodic reports for the customers concerning the current value of their units and the income generated by the program.

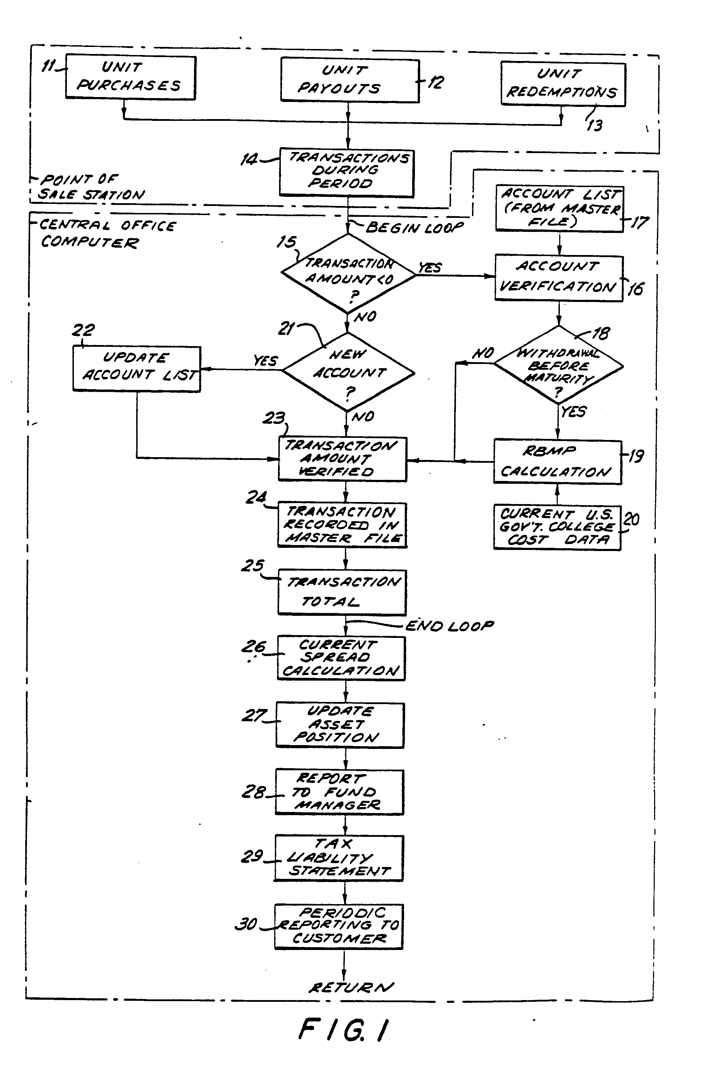

With the foregoing overview in mind, the detailed operation of the system can be best be understood by referring to FIGS. 1-3 which illustrate the system in the context of an insurance investment program for funding the cost of a future college education. Although funding future college education costs is the particular embodiment shown and described herein, it will be apparent to those skilled in the art how the invention can be adapted, within the scope of the invention, to insurance investment programs for funding other future liabilities of uncertain cost.

As ahown in FIG. 1, the customer transaction operations performed at the point-of-sale stations include blocks 11-14. Customer transactions can be purchases, payouts, or redemptions of fund units.

Unit purchase data is entered at block 11, unit payout data is entered at block 12, and unit redemption data is entered at block 13. Each entry includes the customer's name and account number and the transaction amount. The entered transaction data is stored at block 14 for transmission to the central processing facility.

The transaction data accumulated at the point-of-sale stations is transmitted periodically (e.g., daily) to the central processing facility. Alternatively, the data can be transmitted immediately upon entry and accumulated for processing at the central facility.

The data for each incoming transaction is processed individually in a loop beginning with block 15 and ending at block 25 where all transactions in a batch (e.g., a day) are totalled prior to further processing as a group in accordance with block 26 et seq.

The incoming transaction data is first subjected to test 15 which determines whether the transaction is a purchase (NO output) or a redemption (YES output).

If the transaction is a purchase, the system flow passes to test 21 which determines if the purchase is the first transaction in a new account or an additional transaction in an existing account. For new accounts the system flow passes to block 22 which creates a new entry in the account list based on the transaction data.

Transaction data for both new and existing accounts then passes to block 23 which checks the transaction data for possible errors in calculation at the point-of-sale station.

If the transaction is a payout or a withdrawal, data flow moves from test 15 to block 16 where the transaction data is verified to confirm that it is from a valid account. The account information necessary to verify the transaction data is supplied from the account list stored in the system's master file, shown at block 17. Thereafter, the data flow passes to test 18, which determines whether the transaction is a payout (withdrawal at maturity) or a redemption (withdrawal before maturity). Payout transaction data passes to verification block 23. For redemption transactions, the redemption before maturity penalty (RBMP) must be calculated. This is accomplished at block 19. The RBMP calculation is based on the current value of an insurance unit which is a function of the present college cost data. The college cost data is supplied from one of the system's data files shown at block 20. From the RBMP calculation, system flow for redemption transactions also passes to verification block 23 which checks for possible errors made at the point-of-sale station.

From verification block 23, system flow passes to block 24, where each transaction is recorded in the system's master file, and the customer account list data is updated. Thereafter, system flow passes to block 25, where purchase, payout, and redemption transactions are totalled.

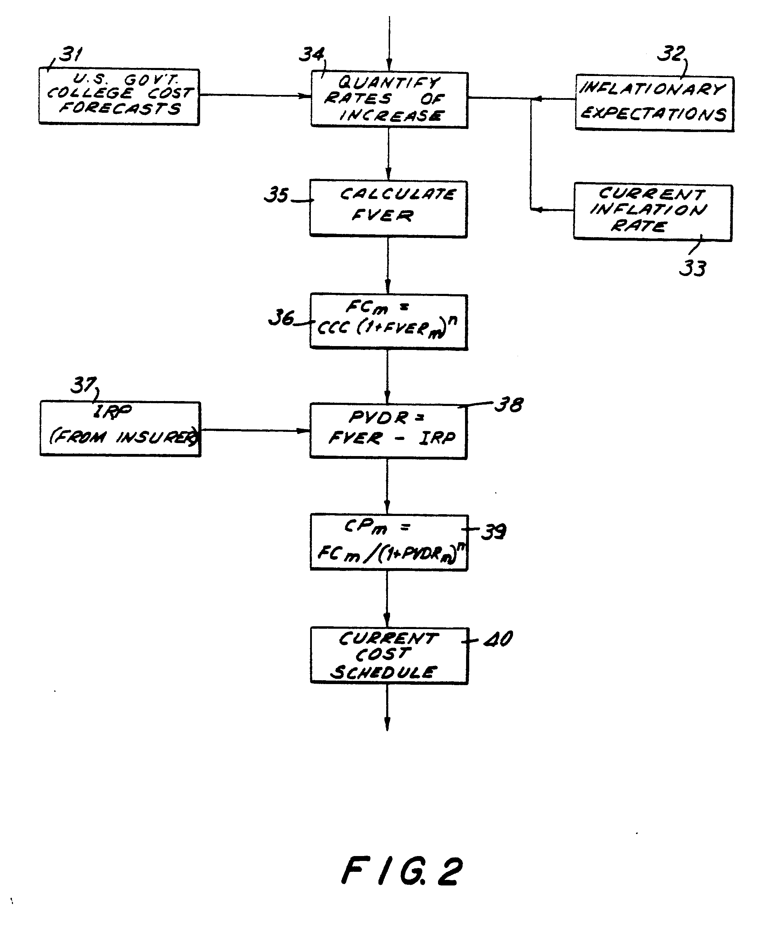

Next, system flow passes to block 26, where the current spread calculation is carried out to create an updated schedule of the current charge to customers for insurance units based on the prevailing college cost and inflation rate data. The current spread calculation is explained in greater detail below in relation to FIG. 2. The updated schedule of current charges is transmitted to the point-of-sale stations. There, the - schedule is used by the salesmen to provide cost information to customers and to set the cost for unit purchases, unit payouts, and unit redemptions.

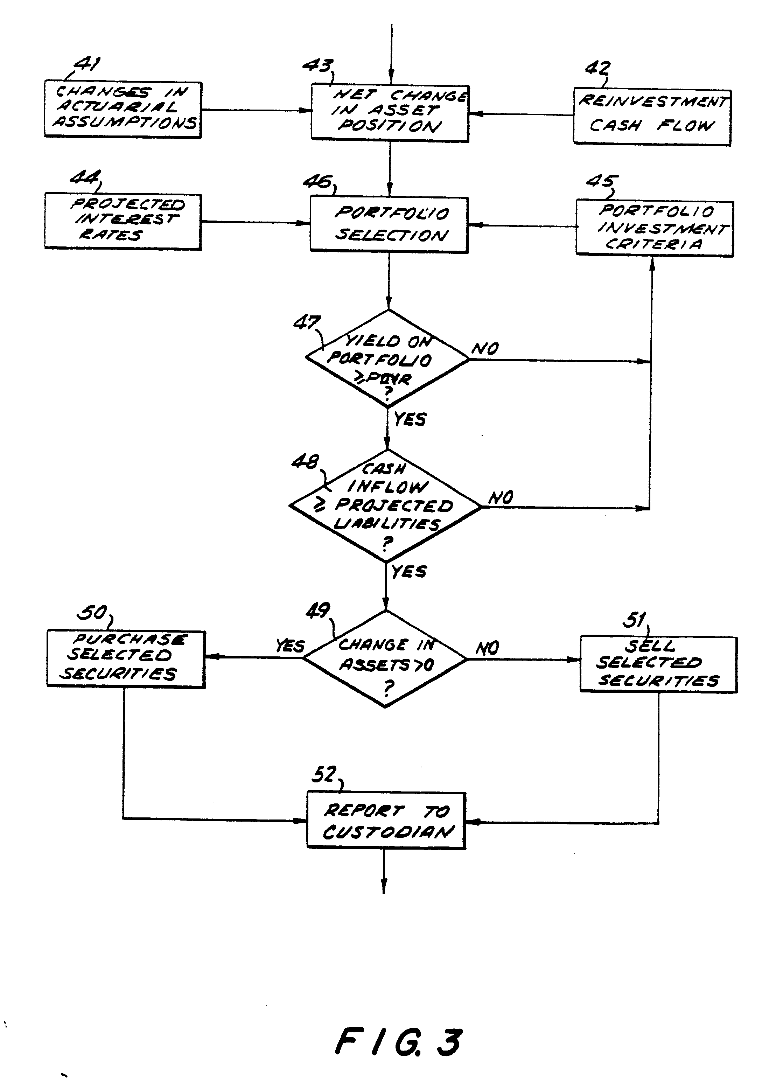

System flow then proceeds to block 27 which carries out the update asset position operation to determined what investment transactions should be made in the fund investment portfolio based on current and projected customer transactions. The update assert position operation is explained in greater detail below in relation to FIG. 3. The data processing system advises the fund manager of its determination concerning the net amount of required investment transaction and provides a list of the investments which might be suitable for purchase or sale. Based on this information, the manager can choose the investment transactions to be made and enter the investment transaction data into the system.

After the investment transaction data is entered, system flow passes to block 28, where a report is created for the investment manager which details the changes made during the period, including the transaction totals for the period, the fund assets purchased and sold, the projection of the cash flow requirements for customer transactions, the projection of the cash flow generated from the fund assets, etc.

Next, system flow passes to block 29, where the system periodically (e.g., annually) prepares a tax liability statement for each customer and for the fund manager. Also, at block 30, the system prepares another periodic report (e.g., quarterly) to provide the customer with current account information.

Referring now to FIG. 2, there is shown a more detailed flow chart for the current spread calculation process corresponding to block 26 of FIG. 1. The current spread calculation creates a schedule of the current charge to customers for insurance units of various maturity dates. The calculation proceeds on the basis of information concerning current college costs, the current inflation rate and the projections for change of the inflation rate, and the risk premium which compensates the fund for assuming the investment risk.

The process starts at block 34 with an evaluation of several variables which contribute to the increase in college costs. Data concerning the current inflation rate (block 33) and the expected changes in the inflation rate (block 32) are entered into the system by the fund manager. Data concerning current college costs and the rate of increase of college costs (e.g., in the United States of America, U.S. Department of Education College Cost Forecasts) is entered into the system (block 31). The system quantifies and combines this data (block 34) and calculates a future value escalation rate (FVER) for each maturity offered (block 35) and to fix current college costs (CCC). Flow then passes to block 36, which calculates the future college cost at each maturity ($FC_m$) by escalating the current college cost (CCC) at the FVER rate according to the relation $FC_m = CCC(1 + FVER_m)^n$, where n is the number of years to maturity. This future value is then discounted at a rate, the present value discount rate (PVDR), which represents the estimated inflation rate (FVER) minus the insurer's risk premium (IRP). The insurer's risk premium rate is entered by the fund manager (block 37) and can be adjusted to compensate for market volatility or other factors which affect the investment risk involved. The calculation of the PVDR is accomplished at block 38. Then, at block 39, the future cost for each maturity is discounted to the present value using the PVDR to determine the current price per insurance unit for each maturity ($CP_m$) according to the relation $CP_m = FC_m(1 + PVDR_m)^{-n}$, where n is the number of years to maturity.

Finally, the $CP_m$ values are assembled into a current cost schedule at block 40 and the current cost - schedule is transmitted to the point of sale stations, At this point the current spread calculation is completed and control is then transferred to the update asset function corresponding to block 27 in FIG. 1 which will now be discussed in more detail.

Referring now to FIG. 3, there is shown a more detailed schematic flow chart for the update asset position function (block 27). This operation enables the fund manager to evaluate changes in the fund investment portfolio to invest net income, to meet redemption and payout obligations, and to structure the investment portfolio to provide for funding future obligations while maximizing return on the portfolio.

First, the net change in the fund's asset position is determined at block 43. This determination is made by combining the totalled customer transaction data (generated at block 25), actuarial data (block 41), and reinvestment cash flow data (block 42). The actuarial data is entered into the system by the fund manager based on information concerning the projected rate of increases of college costs, basic economic data which affect those costs, and the redemption rate of insurance units. The reinvestment cash flow data is generated by the system and includes income realized from the fund's investments, e.g., dividends or bond coupon payments, plus the principal amounts realised from securities which matured or were sold during the period.

The result of the net change in asset position data is sent to block 46 for selection of the investments be purchased or sold. Also provided at block 46 is data concerning projected interest rate levels (block 44), investment criteria entered by the fund manager and data from the system's data base concerning the range of securities available for purchase or sale (block 45). The system selects a list of securities which meet these various criteria and displays the options to the fund manager. The fund manager enters his selection of investment transactions into the system.

Thereafter, flow passes to two tests which evaluate the changed fund portfolio. First, test 47 determines whether the yield on the new portfolio is equal to or exceeds PDVR i.e. whether the rate of return on investments is enough to match the expected rate of increase in liabilities minus the risk premium. Second, test 48 determines whether the cash inflow flow the new portfolio exceeds the projected liabilities, i.e. whether the return of interest and principle from maturing securities matches the funds liabilities due to payouts on maturing insurance units and expected redemption before maturity of insurance units. Only if the fund manager's selections pass both tests are the investment transactions carried out. Otherwise, control returns to the portfolio selection step (block 46) via block 45 at which the problems with the selected transactions are displayed to the fund manager so that he can revise his criteria and make a new selection of investments. The selection/evaluation loop (46, 47, 48, 45) continues until the fund manager is satisfied that the return on the portfolio is maximised and the portfolio meets the tests imposed by the system.

Then, flow passes to test 49 to determine whether the selected transactions are purchases or sales and to blocks 50 and 51 to effect orders for purchase or sale of the selected securities. At block 52, a report of the securities purchased or sold is generated. At that point, the update asset function is completed and system flow passes to the report generating functions at blocks 28, 29, and 30 discussed earlier with reference to FIG. 1.

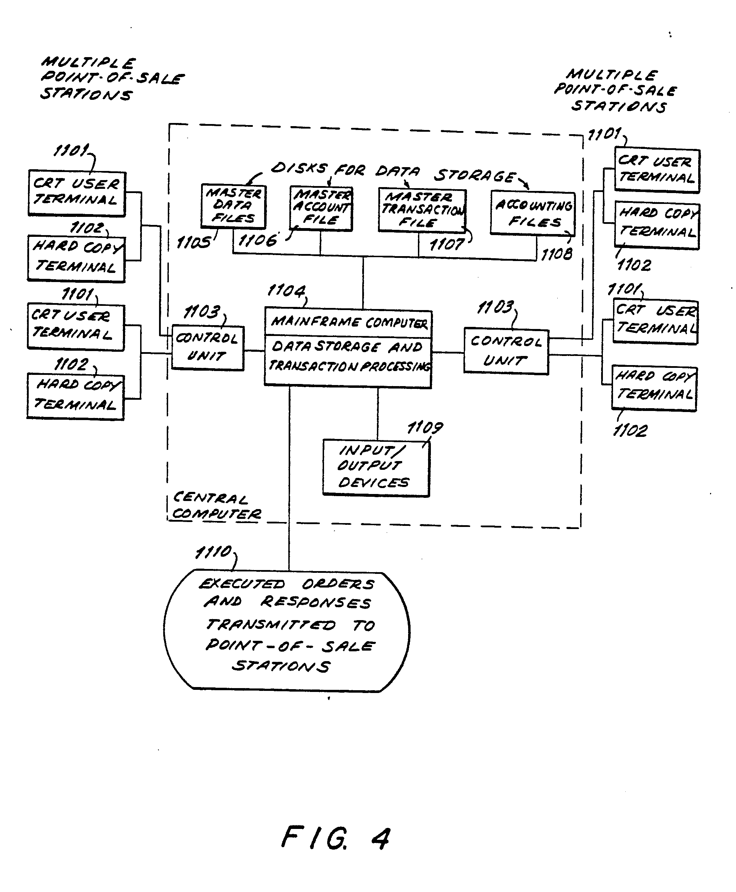

The various conventional elements making up the hardware system for implementing the invention and their interrelationships are shown in Figure 4.

At each point-of-sale station such as the office of a securities broker, there is a CRT user terminal (block 1101) and associated hard copy terminal (block 1102). The hardware system would include a plurality of these terminals. Each terminal communicates with a central computer (block 1104) through a control unit (block 1103), which controls the point-of-sale terminals, receives purchase orders, redemption orders, and account inquiries from the point-of-sale stations and transmits them to the central computer and receives account verifications, transaction verifications, unit prices, and responses to customer inquiries regarding account status from the central computer (block 1104) and transmits them to the appropriate point-of-sale stations. Each control unit could serve up to approximately 20 point-of-sale stations. The account verifications, transaction verifications unit prices, and responses to customer inquiries are transmitted first to the CRT user terminal (block 1101). If the investor requests a written transaction record or a written account status report, the hard copy terminal (block 1102( provides it upon command.

The central computer (block 1104) contains storage space for data relating to transactions that are in process. The central computer (block 1104) also transmits information to and receives information from the master data files (block 1105), transmits information to and receives information from the master account file (block 1106), and transmits information to and receives information from the master transaction file (block 1107) and the accounting files (block 1108). The system also has a complement of input/output devices (block 1109).

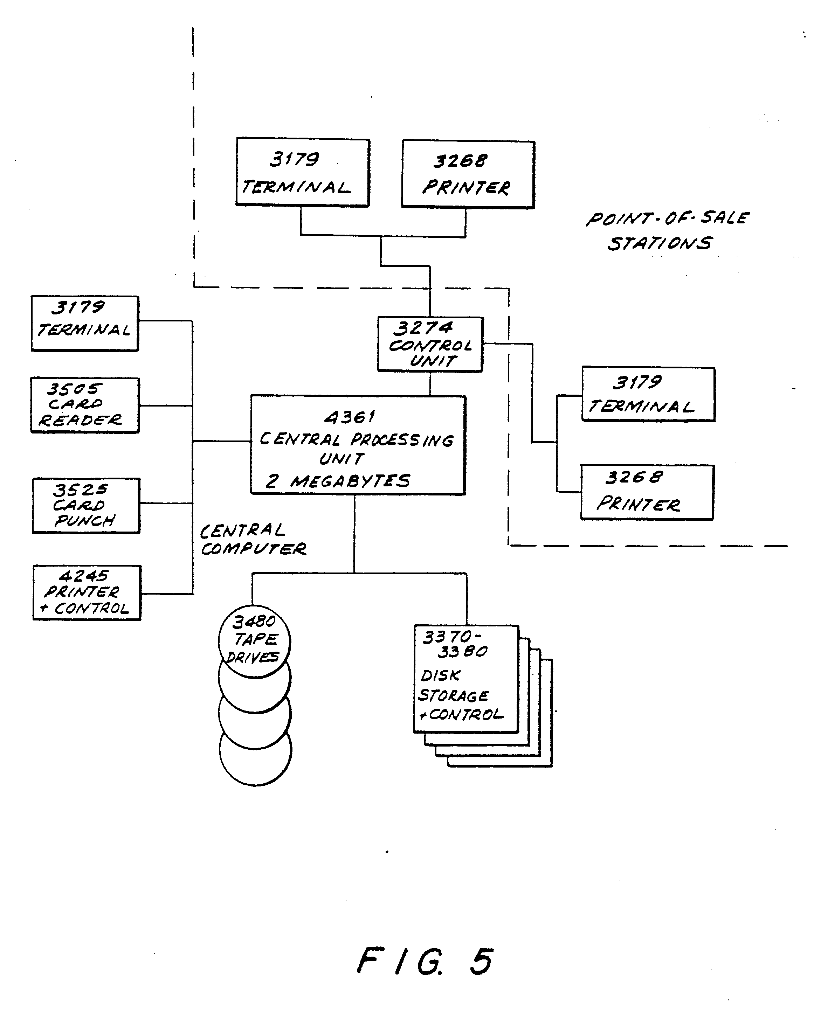

Figure 5 provides a schematic diagram of a smallscale version of the basic hardware system of Figure 4. The exemplary system includes the following types and number of devices:

```
----------------------------------------------------------------
No.    Make    Model      Item in Figure 4
----------------------------------------------------------------
1      IBM     3278/3279
               3179       CRT User terminal 1101

2      IBM     3268       Hard copy terminal 1102

1      IBM     3274       Control unit 1103

1      IBM     4361       Central computer 1104

4      IBM     3370 -
                3380      disks         )

4      IBM     3420/3480  tape drives ) 1105-1108

1      IBM     3179       CRT terminal)


table contd./...



1      IBM     3505       Card reader   ) 1109

1      IBM     3525       Card punch    )

1      IBM     4245       Printer       )
```

It is understood that there are a large number of commercially available substitutes for each item of hardware which could be combined into fully compatible systems. Accordingly, the scope of the invention is not limited by the particularity of the hardware system in Figures 4 and 5.

## Claims

1. A data processing system for administering an insurance program to insure against the uncertainty of the cost of a service or commodity at a future date, which determines the premium charges required and manages the portfolio of investments purchased with invested premiums comprising:

means for determining the policy premium charge based on the present cost of the service or commodity, data concerning the time rate of change of said present cost, and the time period to maturity of the policy;

means for determining the redemption value of a policy based on the current premium charge for a policy having the same-yield and maturity data;

means for entering policy purchase and redemption transaction data into the data processing system;

account list means for storing an account list including current information for each policy account;

asset position list means for storing an asset position list including current information concerning the portfolio of investments purchased with the policy premiums;

means for periodically processing said policy purchase and redemption transaction data to update the account;

means for entering the selected security purchase and sale transaction data, to update the asset position list.

2. The data processing system of claim 1, wherein the means for determining the policy premium charge comprises:

means for calculating a future value escalation rate in response to information concerning the current inflation rate, the projected rate of change of the inflation rate, and the projected rate of change of cost of the service or commodity;

means for projecting the future cost of the service or commodity based on the current cost and the future value escalation rate;

means for determining the present value discount rate by subtracting an insurer's risk premium rate from the future value escalation rate;and

means for discounting the future cost based on the present value discount rate to determined a current price for the policy premium charge.

3. The data processing system of claim 1, wherein the means for providing portfolio management data comprises:

means for determining the net change in asset position in response to information concerning the net amount of transactions, the reinvestment cash flow from the portfolio, and actuarial data; and

means responsive to the net change in asset position determination and to data inputs concerning investment criteria and projected interest rates for selecting securities to be purchased or sold, and for evaluating the effect of the selected security purchases or sales on the portfolio to reject any selection for which the yield on the portfolio is less than the future value escalation rate or for which the cash inflow from the portfolio is less than the total of projected policy payouts and policy redemptions.

4. A data processing method for administering an insurance program to insure against the uncertainty of the cost of a service or commodity at a future date, which determines the premium charges required and manages the portfolio of investments purchased with invested premiums comprising the steps of:

determining the policy premium charge based on the present cost of the service or commodity, data concerning the time rate of change of said present cost, and the time period to maturity of the policy;

determining the redemption value of a policy based on the current premium charge for a policy having the same yield and maturity date;

entering the policy purchase and redemption transaction data;

storing an account list including current information for each policy account;

storing an asset position list including current information concerning the portfolio of investments purchased with the policy premiums;

periodically processing said policy purchase and redemption transaction data to update said account list;

determining the net amount represented by said transaction data for a period for which said periodic processing is performed;

providing portfolio management data in response to said transaction data and to information from said asset position list, so that securities can be selectively purchased or sold to provide that the cash flow from the portfolio is adequate for funding policy payouts and redemptions and to provide that the rate of yield of the portfolio at least matches the rates of change of the present cost of the service or commodity;

entering the selected security purchase and sale transaction data, to update the asset position list;

generating a management report including said portfolio management data and said information in said updated asset position list; and

generating a customer report including current information for each policy account.

5. A data processing system for administering a program to provide a future return adequate to meet payouts for funding the uncertain cost of a service or commodity at a future date, which determines payments required for participation in the program and manages a portfolio of assets purchased with the participation payments, said system comprising:

means for determining the payment required for participation in the program based on the cost of the service or commodity at time of payment, data concerning the expected time rate of change of the cost of said service or commodity, and the time period from the present to said future date;

means for entering participation payment data into the data processing system;

asset position list means for storing an asset position list including information concerning the portfolio of assets purchased with the participation payments;

means for periodically processing said participation payment data to determine the total of said participation payment data for a period for which said periodic processing is performed;

means responsive to said total participation payment data and to information from said asset position list for providing portfolio management data so that assets can be selectively purchased or sold to provide that the cash flow from the portfolio is adequate for funding program payouts and to provide that the yield of the portfolio at least matches the expected time rate of change from the present to said future date of the present cost of the service or commodity; and

means for generating a management report including said portfolio management data and said information in said asset position list.

6. The data processing system of claim 5, further comprising means for entering the selected asset purchase and sale transaction data, to update the assert position list.

7. The data processing system of claim 5, wherein the means for determining the payment required for participation in the program comprises:

means for determining a future value escalation rate in response to information concerning the expected time rate of change of the cost of the service or commodity;

means for projecting the future cost of the service or commodity based on the current cost and the future value escalation rate; and

means for discounting the future cost to a present value based on at least the future value escalation rate to determine the current price for the participation payment.

8. The data processing system of claim 7 wherein said discounting means discounts said future cost further based upon a risk rate.

9. The data processing system of claim 7, wherein the means for providing portfolio management data comprises:

means for determining the net change in asset position in response to information concerning the net amount of transactions, reinvestment cash flow from the portfolio, and actuarial data; and

means responsive to the net change in asset position determination and to data inputs concerning investment criteria and projected interest rates for selecting assets to be purchased or sold, and for evaluating the effect of the selected asset purchases or sales on the portfolio to identify selections which cause at least one of (a) the yield of the portfolio to be less than the future value escalation rate, and (b) the cash inflow from the portfolio to be less than the total of projected program payouts.

10. The data processing system of claim 5, further comprising account list means for storing an account list including current information for each participant account.

11. A data processing method for administering a program to provide a future return adequate to meet payouts for funding the uncertain cost of a service or commodity at a future date, which determines payments required for participation in the program and manages a portfolio of assets purchased with the participation payments, said method comprising the steps of:

determining the payment required for participation in the program based on the cost of the service or commodity at time of payment, data concerning the expected time rate of change of the cost of said service or commodity, and the time period from the present to said future date;

entering participation payment data;

storing an asset position list including information concerning the portfolio of assets purchased with the participation payments;

periodically processing said participation payment data to determine the total of said participation payment data for a period for which said periodic processing is performed;

providing portfolio management data in response to said total participation payment data and to information from said asset position list, so that assets can be selectively purchased or sold to provide that the cash flow from the portfolio is adequate for funding program payments and to provide that the yield of the portfolio at least matches the expected time rate of change from the present to said future date of the present cost of the service or commodity; and

generating a management report including said portfolio management data and said information in said asset position list.

12. The data processing method of claim 11, wherein the step of determining the payment required for participation in the program comprises the steps of:

determining a future value escalation rate in response to information concerning the expected time rate of change of the cost of the service or commodity;

projecting the future cost of the service or commodity based on the current cost and the future value escalation rate; and

discounting the future cost to a present value based on at least the future value escalation rate to determine a current price for the participation payment.

13. The data processing method of claim 12 wherein said discounting step comprises discounting said future cost further based upon a risk rate.

14. The data processing method of claim 12, wherein the step of providing portfolio management data comprises the steps of:

determining the net change in asset position in response to information concerning the net amount of transactions, reinvestment cash flow from the portfolio, and actuarial data; and

responsive to the net change in asset position determination and to data inputs concerning investment criteria and projected interest rates, selecting assets to be purchased or sold, and evaluating the effect of the selected asset purchases or sales on the portfolio to identify selections which cause at least one of (a) the yield of the portfolio to be less than the future value escalation rate, and (b) the cash inflow from the portfolio to be less than the total of projected program payouts.

15. The data processing method of claim 11, further comprising entering the selected asset purchase and sale transaction data, to update the asset position list.

16. The data processing method of claim 11, further comprising storing an account list including current information for each participant account.

17. A data processing system for administering a program to provide a future return for meeting payouts, which determines payments required for participation in the program and manages a portfolio of assets purchased with the participation payments, said system comprising:

means for determining the payment required for participation in the program based on the cost of a selected service or commodity at time of payment, data concerning the expected time rate of change of the cost of said service or commodity, and the time period from the present to a preselected future date;

means for entering participation payment data into the data processing system;

asset position list means for storing an asset position list including information concerning the portfolio of assets purchased with the participation payments;

means for periodically processing said participation payment data to determine the total of said participation payment data for a period for which said periodic processing is performed;

means responsive to said total participation payment data and to information from said asset position list for providing portfolio management data so that assets can be selectively purchased or sold to provide that the cash flow from the portfolio is adequate for funding program payouts and to provide that the yield of the portfolio at least matches the expected time rate of change from the present to said future date of the present cost of the service or commodity, whereby said future return is adequate to fund the uncertain cost of the service or commodity at said future date; and

means for generating a management report including said portfolio management data and said information in said asset position list.

18. The data processing system of claim 17, further comprising means for entering the selected asset purchase and sale transaction data, to update the asset position list.

19. The data processing system of claim 17, wherein the means for determining the payment required for participation in the program comprises:

means for determining a future value escalation rate in response to information concerning the expected time rate of change of the cost of the service or commodity;

means for projecting the future cost of the service or commodity based on the current cost and the future value escalation rate; and

means for discounting the future cost to a present value based on at least the future value escalation rate to determine a current price for the participation payment.

20. The data processing system of claim 19 wherein said discounting means discounts said future cost further based upon a risk rate.

21. The data processing system of claim 19, wherein the means for providing portfolio management data comprises:

means for determining the net change in asset position in response to information concerning the net amount of transactions, reinvestment cash flow from the portfolio, and actuarial data; and

means responsive to the net change in asset position determination and to data inputs concerning investment criteria and projected interest rates for selecting assets to be purchased or sold, and for evaluating the effect of the selected asset purchases or sales on the portfolio to identify selections which cause at least one of (a) the yield of the portfolio to be less than the future value escalation rate, and (b) the cash flow from the portfolio to be less than the total of projected program payouts.

22. The data processing system of claim 17, further comprising account list means for storing an account list including current information for each participant account.

23. A data processing method for administering a program to provide a future return for meeting payouts, which determines payments required for participation in the program and manages a portfolio of assets purchased with the participation payments, said method comprising the steps of:

determining the payment required for participation in the program based on the cost of a selected service or commodity at time of payment, data concerning the expected time rate of change of the cost of said service or commodity, and the time period from the present to a preselected future date;

entering participation payment data;

storing an asset position list including information concerning the portfolio of assets purchased with the participation payments;

periodically processing said participation payment data to determine the total of said participation payment data for a period for which said periodic processing is performed;

providing portfolio management data in response to said total participation payment data and to information from said asset position list, so that assets can be selec tively purchased or sold to provide that the cash flow from the portfolio is adequate for funding program payments and to provide that the yield of the portfolio at least matches the expected time rate of change from the present to said future date of the present cost of the service or commodity, whereby said future return is adequate to fund the uncertain cost of the service or commodity at said future date; and

generating a management report including said portfolio management data and said information in said asset position list.

24. The data processing method of claim 23, wherein the step of determining the payment required for participation in the program comprises the steps of:

determining a future value escalation rate in response to information concerning the expected time rate of change of the cost of the service or commodity;

projecting the future cost of the service or commodity based on the current cost and the future value escalation rate; and

discounting the future cost to a present value based on at least the future value escalation rate to determine a current price for the participation payment.

25. The data processing method of claim 24 wherein said discounting step comprises discounting said future cost further based upon a risk rate.

26. The data processing method of claim 24, wherein the steps of providing portfolio management data comprises the steps of:

determining the net change in asset position in response to information concerning the net amount of transactions, reinvestment cash flow from the portfolio, and actuarial data; and

responsive to the net change in asset position determination and to date inputs concerning investment criteria and projected interest rates, selecting assets to be purchased or sold, and evaluating the effect of the selected asset purchases or sales on the portfolio to identify selections which cause at least one of (a) the yield of the portfolio to be less than the future value escalation rate, and (b) the cash inflow from the portfolio to be less than the total of projected program payouts.

27. The data processing method of claim 23, further comprising entering the selected asset purchase and sale transaction data, to update the asset position list.

28. The data processing method of claim 23, further comprising storing an account list including current information for each participant account.

29. A data processing system for administering a program to provide a future return adequate to meet payouts for funding the uncertain cost of a service or commodity at a future date, which determines payments required for participation in the program and manages a portfolio of assets purchased with the participation payments, said system comprising:

means for determining the payment required for participation in the program based on the cost of the service or commodity at time of payment, data concerning the expected time rate of change of the cost of said service or commodity, and the time period from the present to said future date;

means for entering participation payment data into the data processing system;

account list means for storing an account list including current information for each participant account;

asset position list means for storing an asset position list including information concerning the portfolio of assets purchased with the participation payments;

means for periodically processing said participation payment data to determine the total of said participation payment data for a period for which said periodic processing is performed;

means for determining at a date intermediate said present and future dates a value for each participant account as a function of the cost of said service or commodify at time of payment of said participation payment, the rate of change from the present to said intermediate date of the present cost of the service or commodity, and time elapsed from the present to said intermediate date;

means responsive to said total participation payment data and to information from said asset position list for providing portfolio management data so that assets can be selectively purchased or sold to provide that the cash flow from the portfolio is adequate for funding program payouts and to provide that the yield of the portfolio at least matches the expected time rate of change from the present to said future date of the present cost of the service or commodity; and

means for generating a management report including said portfolio management data and said information in said asset position list.

30. The data processing system of claim 29, further comprising means for entering the selected asset purchase and sale transaction data, to update the asset position list.

31. The data processing system of claim 29, wherein the means for determining the payment required for participation in the program comprises:

means for determining a future value escalation rate in response to information concerning the expected time rate of change of the cost of the service or commodity;

means for projecting the future cost of the service or commodity based on the current cost and the future value escalation rate; and

means for discounting the future cost to a present value based on at least the future value escalation rate to determine a current price for the participation payment.

32. The data processing system of claim 31 wherein said discounting means discounts said future cost further based upon a risk rate.

33. The data processing system of claim 31, wherein the means for providing portfolio management data comprises:

means for determining the net change in asset position in response to information concerning the net amount of transactions, reinvestment cash flow from the portfolio, and actuarial data; and

means responsive to the net change in asset position determination and to data inputs concerning investment criteria and projected interest rates for selecting assets to be purchased or sold, and for evaluating the effect of the selected asset purchases or sales on the portfolio to identify sections which cause at least one of (a) the yield of the portfolio to be less than the future value escalation rate, and (b) the cash inflow from the portfolio to be less than the total of projected program payouts.

34. A data processing method for administering a program to provide a future return adequate to meet payouts for funding the uncertain cost of a service or commodity at a future date, which determines payments required for participation in the program and manages a portfolio of assets purchased with the participation payments, said method comprising the steps of:

determining the payment required for participation in the program based on the cost of the service or commodity at time of payment, data concerning the expected time rate of change of the cost of said service or commodity, and the time period from the present to said future date:

entering participation payments data;

storing an account list including current information for each participant account;

storing an asset position list including information concerning the portfolio of assets purchased with the participation payments;

periodically processing said participation payment data to determine the total of said participation payment data for a period for which said periodic processing is performed;

determining at a date intermediate said present and future dates a value for each participant account as a function of the cost of said service or commodity at time of payment of said participation payment, the rate of change from the present to said intermediate date of the present cost of the service or commodity, and time elapsed from the present to said intermediate date;

providing portfolio management data in response to said total participation payment data and to information from said asset position list, so that assets can be selectively purchased or sold to provide that the cash flow from the portfolio is adequate for funding program payments and to provide that the yield of the portfolio at least matches the expected time rate of change from the present to said future date of the present cost of the service or commodity; and

generating a management report including said portfolio management data and said information in said asset position list.

35. The data processing method of claim 34, further comprising entering the selected asset purchase and sale transaction data, to update the asset position list.

36. The data processing method of claim 34, wherein the step of determining the payment required for participation in the program comprises the steps of:

determining a future value escalation rate in response to information concerning the expected time rate of change of the cost of the service or commodity;

projecting the future cost of the service or commodity based on the current cost and the future value escalation rate; and

discounting the future cost to a present value based on at least the future value escalation rate to determine a current price for the participation payment.

37. The data processing method of claim 36 wherein said discounting step comprises discounting said future cost further based upon a risk rate.

38. The data processing method of claim 36, wherein the step of providing portfolio management data comprises the steps of:

determining the net change in asset position in response to information concerning the net amount of transactions, reinvestments cash flow from the portfolio, and actuarial data; and

responsive to the net change in asset position determination and to data inputs concerning investment criteria and projected interest rates, selecting assets to be purchased or sold, and evaluating the effect of the selected asset purchases or sales on the portfolio to identify selections which cause at least one of (a) the yield of the portfolio to be less than the future value escalation rate, and (b) the cash inflow from the portfolio to be less than the total of projected program payouts.

39. A data processing system for administering a program to provide a future return adequate to meet payouts for funding the uncertain cost of a service or commodity at a future date, which determines payments required for participation in the program and manages a portfolio of assets purchased with the participation payments, said system comprising:

means for determining the payment required for participation in the program based on the cost of the service or commodity at time of payment, data concerning the expected time rate of change of the cost of said service or commodity, and the time period from the present to said future date;

means for entering participation payment data into the data processing system;

account list means for storing an account list including current information for each participant account;

asset position list means for storing an asset position list including information concerning the portfolio of assets purchased with the participation payments;

means for periodically processing said participation payment data to determine the total of said participation payment data for a period for which said periodic processing is performed;

means for determining at a date intermediate said present and future dates value data for each participant account as a function of the cost of said service or commodity at time of payment of said participation payment, the rate of change from the present to said intermediate date of the present cost of the service or commodity, and time elapsed from the present to said intermediate date;

means responsive to said total participation payment data, to said participant account value data, and to information from said asset position list for providing portfolio management data so that assets can be selectively purchased or sold to provide that the cash flow from the portfolio is adequate for funding program payouts and to provide that the yield of the portfolio at least matches the expected time rate of change from the present to said future date of the present cost of the service or commodity; and

means for generating a management report including said portfolio management data and said information in said asset position list.

40. The data processing system of claim 39, further comprising means for entering the selected asset purchase and sale transaction data, to update the asset position list.

41. The data processing system of claim 39, wherein the means for determining the payment required for participation in the program comprises:

means for determining a future value escalation rate in response to information concerning the expected time rate of change of the cost of the service or commodity;

means for projecting the future cost of the service or commodity based on the current cost and the future value escalation rate; and

means for discounting the future cost to a present value based on at least the future value escalation rate to determine a current price for the participation payment.

42. The data processing system of claim 41 wherein said discounting means discounts said future cost further based upon a risk rate.

43. The data processing system of claim 41, wherein the means for providing portfolio management data comprises:

means for determining the net change in asset position in response to information concerning the net amount of transactions, reinvestment cash flow from the portfolio, and actuarial data; and

means responsive to the net change in asset position determination and to data inputs concerning investment criteria and projected interest rates for selecting assets to be purchased or sold, and for evaluating the effect of the selected asset purchases or sales on the portfolio to identify selections which cause at least one of (a) the yield of the portfolio to be less than the future value escalation rate, and (b) the cash inflow from the portfolio to be less than the total of projected program payouts.

44. A data processing method for administering a program to provide a future return adequate to meet payouts for funding the uncertain cost of a service or commodity at a future date, which determined payments required for participation in the program and manages a portfolio of assets purchased with the participation payments, said method comprising the steps of:

determining the payment required for participation in the program based on the cost of the service or commodity at time of payment, data concerning the expected time rate of change of the cost of said service or commodity, and the time period from the present to said future date;

entering participation payment data;

storing an account list including current information for each participant account;

storing an asset position list including information concerning the portfolio of assets purchased with the participation payments;

periodically processing said participation payment data to determine the total of said participation payment data for a period for which said periodic processing is performed;

determining at a date intermediate said present and future dates value data for each participant account as a function of the cost of said service or commodity at time of payment of said participation payment, the rate of change from the present to said intermediate date of the present cost of the service or commodity, and time elapsed from the present to said intermediate date;

providing portfolio management data in response to said total participation payment data, to said participant account value data, and to information from said asset position list, so that assets can be selectively purchased or sold to provide that the cash flow from the portfolio is adequate for funding program payments and to provide that the yield of the portfolio at least matches the expected time rate of change from the present to said future date of the present cost of the service or commodity; and

generating a management report including said portfolio management data and said information in said asset position list.

45. The data processing method of claim 44, further comprising entering the selected asset purchase and sale transaction data, to update the asset position list.

46. The data processing method of claim 44, wherein the steps of determining the payment required for participation in the program comprises the steps of:

determining a future value escalation rate in response to information concerning the expected time rate of change of the cost of the service or commodity;

projecting the future cost of the service or commodity based on the current cost and the future value escalation rate; and

discounting the future cost to a present value based on at least the future value escalation rate to determine a current price for the participation payment.

47. The data processing method of claim 46 wherein said discounting step comprises discounting said future cost further based upon a risk rate.

48. The data processing method of claim 46, wherein the step of providing portfolio management data comprises the steps of:

determining the net change in asset position in response to information concerning the net amount of transactions, reinvestment cash flow from the portfolio, and actuarial data; and

responsive to the net change in asset position determination and to data inputs concerning investment criteria and projected interest rates, selecting assets to be purchased or sold, and evaluating the effect of the selected asset purchases or sales on the portfolio to identify selections which cause at least one of (a) the yield of the portfolio to be less than the future value escalation rate, and (b) the cash inflow from the portfolio to be less than the total of projected program payouts.

49. A data processing system for administering a program to provide a future return adequate to meet payouts for funding the uncertain cost of a service or commodity at a future date, which determines payments required for participation in the program and manages a portfolio of assets purchased with the participation payments, said system comprising:

means for determining the payment required for participation in the program based on the cost of the service or commodity at time of payment, data concerning the expected rate of change of the cost of said service or commodity, and the time period from the present to said future date;

means for entering participation payment data into the data processing system;

asset position list means for storing an asset position list including information concerning the portfolio of assets purchased with the participation payments;

means for periodically processing said participation payment data to determine the total of said participation payment data for a period for which said periodic processing is performed;

means responsive to said total participation payment data and to information from said asset position list for providing portfolio management data so that assets can be selectively purchased or sold to provide that the yield of the portfolio and the cash flow from the portfolio are adequate for funding program payouts; and

means for generating a management report including said portfolio management data and said information in said asset position list.

13

0 278 132

50. The data processing system of claim 49, further comprising means for entering the selected asset purchase and sale transaction data, to update the asset position list.

51. The data processing system of claim 49, wherein the means for providing portfolio management data comprises:

means for determining the net change in asset position in response to information concerning the net amount of transactions, reinvestment cash flow from the portfolio, and actuarial data; and

means responsive to the net change in asset position determination and to data inputs concerning investment criteria and projected interest rates for selecting assets to be purchased or sold, and for evaluating the effect of the selected asset purchases or sales on the portfolio to identify selections which cause cash inflow from the portfolio to be less than the total of projected program payouts.

52. The data processing system of claim 49, furthere comprising account list means for storing an account list including current information for each participant account.

53. A data processing method for administering a program to provide a future return adequate to meet payouts for funding the uncertain cost of a service or commodity at a future date, which determines payments required for par ticipation in the program and manages a portfolio of assets purchased with the participation payments, said method comprising the steps of:

determining the payment required for participation in the program based on the cost of the service or commodity at time of payment, data concerning the expected time rate of change of the cost of said service or commodity, and the time period from the present to said future date;

entering participation payment data;

storing an asset position list including information concerning the portfolio of assets purchased with the participation payments;

periodically processing said participation payments data to determine the total of said participation payment data for a period for which said periodic processing is performed;

providing portfolio management data in response to said total participation payment data and to information from said asset position list, so that assets can be selectively purchased or sold to provide that the yield of the portfolio and the cash flow from the portfolio are adequate for funding program payouts; and

generating a management report including said portfolio management data and said information in said asset position list.

54. The data processing method of claims 53, further comprising entering the selected asset purchases and sale transaction data, to update the asset position list.

55. The data processing method of claim 53, further comprising storing an account list including current information for each participant account.

The data processing method of claim 53, wherein the step of providing portfolio management data comprises the steps of:

determining the net change in asset position in response to information concerning the net amount of transactions, reinvestment cash flow from the portfolio, and actuarial data; and

responsive to the net change in asset position determination and to data inputs concerning investment criteria and projected interest rates, selecting assets to be purchased or sold, and evaluating the effect of the selected asset purchases or sales on the portfolio to identify selections which cause cash inflow from the portfolio to be less than the total of projected payouts.

57. A data processing system for administering a program to provide a future return adequate to meet payouts for funding the uncertain cost of a service or commodity at a future date, which determines payments required for participation in the program and manages a portfolio of assets purchased with the participation payments, said system comprising:

means for determining the payment required for participation in the program based on the cost of the service or commodity at time of payment, data concerning the expected time rate of change of the cost of said service or commodity, a risk premium, and the time period from the present to said future date;

means for entering participation payment date into the data processing system:

asset position means for storing an asset position list including information concerning the portfolio of assets purchased with the participation payments:

means for periodically processing said participation payment data to determine the total of said participation payment data for a period for which said periodic processing is performed;

means responsive to said total participation payment data and to information form said asset position list for providing portfolio management data so that assets can be selectively purchased or sold to provide that the cash flow from the portfolio is adequate for funding program payouts and to provide that the yield of the portfolio at least matches the expected time rate of change from the present to said future date of the

14

present cost of the service or commodity less the risk premium; and

means for generating a management report including said portfolio management data and said information in said asset position list.

58. The data processing system of claim 57, further comprising means for entering the selected asset purchase and sale transaction data, to update the asset position list.

59. The data processing system of claim 57, wherein the means for determining the payment required for participation in the program comprises:

means for determining a future value escalation rate in response to information concerning the expected time rate of change of the cost of the service or commodity;

means for projecting the future cost of the service or commodity based on the current cost and the future value escalation rate; and

means for discounting the future cost to a present value based on at least the future value escalation rate to determine a current price for the participation payment.

60. The data processing system of claim 59 wherein said discounting means discounts said future cost further based upon said risk premium.

61. The data processing system of claim 59, wherein the means for providing portfolio management data comprises:

means for determining the net change in asset position in response to information concerning the net amount of transactions, reinvestment cash flow from the portfolio, and actuarial data; and

means responsive to the net change in asset position determination and to data inputs concerning investment criteria and projected interest rates for selecting assets to be purchased or sold, and for evaluating the effect of the selected asset purchases or sales on the portfolio to identify selections which cause at least one of (a) the yield of the portfolio to be less than the future value escalation rate, and (b) the cash inflow from the portfolio to be less than the total of projected program payouts.

62. The data processing system of claims 57, further comprising account list means for storing an account list including current information for each participant account.

FIG. 1

| 31 | U.S. GOV'T. COLLEGE COST FORECASTS |
|---|---|
| 34 | QUANTIFY RATES OF INCREASE |
| 32 | INFLATIONARY EXPECTATIONS |
| 35 | CALCULATE FVER |
| | CURRENT INFLATION RATE |
| 33 | |
| 36 | $FC_m = CCC\,(1+FVER_m)^n$ |
| 37 | IRP (FROM INSURER) |
| 38 | $PVDR = FVER - IRP$ |
| 39 | $CP_m = FC_m\,/(1+PVDR_m)^n$ |
| 40 | CURRENT COST SCHEDULE |

FIG. 2

FIG. 3

MULTIPLE POINT-OF-SALE STATIONS

MULTIPLE POINT-OF-SALE STATIONS

DISKS FOR DATA STORAGE

MASTER DATA FILES — 1105

MASTER ACCOUNT FILE — 1106

MASTER TRANSACTION FILE — 1107

ACCOUNTING FILES — 1108

1101 — CRT USER TERMINAL

1102 — HARD COPY TERMINAL

1101 — CRT USER TERMINAL

1102 — HARD COPY TERMINAL

1101 — CRT USER TERMINAL

1102 — HARD COPY TERMINAL

1101 — CRT USER TERMINAL

1102 — HARD COPY TERMINAL

1103 — CONTROL UNIT

1104 — MAINFRAME COMPUTER DATA STORAGE AND TRANSACTION PROCESSING

1103 — CONTROL UNIT

1109 — INPUT/ OUTPUT DEVICES

CENTRAL COMPUTER

1110 — EXECUTED ORDERS AND RESPONSES TRANSMITTED TO POINT-OF-SALE STATIONS

FIG. 4

POINT-OF-SALE
STATIONS

3179 TERMINAL

3268 PRINTER

3179 TERMINAL

3505 CARD READER

3525 CARD PUNCH

4245 PRINTER + CONTROL

CENTRAL COMPUTER

3274 CONTROL UNIT

4361 CENTRAL PROCESSING UNIT 2 MEGABYTES

3179 TERMINAL

3268 PRINTER

3480 TAPE DRIVES

3370-3380 DISK STORAGE + CONTROL

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | IBM TECHNICAL DISCLOSURE BULLETIN, vol. 13, no. 11, April 1971, pages 3274-3275, New York, US; D.C. GAZIS: "Real estate investment analysis system" * Whole document * | 1 | G 06 F 15/21 |
| A | EP-A-0 182 450 (ROBERTS) * Page 1, lines 1-15; page 6, line 9 - page 7, line 17; page 8, line 33 - page 13, line 9; figure 1 * | 1 | |
| A | GB-A-1 390 397 (DELANO) | | |
| A | COMPUTER, vol. 9, no. 9, September 1976, pages 6-15, Long Beach, US; B.R. GAINES et al.: "Minicomputers in security dealing" | | TECHNICAL FIELDS SEARCHED (Int. Cl.4)  G 06 F 15/21  G 06 F 15/30  G 06 F 15/28 |

The present search report has been drawn up for all claims

| Place of search | Date of completion of the search | Examiner |
|---|---|---|
| THE HAGUE | 01-10-1987 | CHUGG D.J. |